# EUROPEAN PATENT APPLICATION

(11) **EP 1 780 665 A1**
(43) Date of publication of application: **02.05.2007**
(21) Application number: 04771862.2
(22) Date of filing: 19.08.2004
(51) Int. Cl.: G06Q 10/00, G06F 3/00, G06F 13/00

(54) **SALES SUPPORT SYSTEM**

(71) Applicant: SyncPlus, Inc., Tokyo 150-0011 (JP)
(72) Inventor: KAWAKITA, Jun c/o SyncPlus, Inc., Tokyo 150-0011 (JP)
(74) Representative: HOFFMANN EITLE
(86) International application number: PCT/JP2004/011901
(87) International publication number: WO 2006/018877

(57) **Abstract**

There is provided a sales support system enabling a user to purchase a product in a store on a network while communicating with a store clerk. The sales support system comprises store page display means for storing content associated with the store site and transmitting the content to a customer terminal, and store clerk call means for receiving information on a consultation instruction from a customer terminal, selecting one port which can be used in a collaboration server, transmitting to the collaboration server or the customer terminal an instruction for connecting the customer terminal to the collaboration server via the port, and transmitting the selected port number and a contact number to the customer terminal.

## Description

### FIELD OF THE INVENTION

The present invention is related to a sales support system enabling a user to purchase a product or a service when products and services are sold over a network, while communicating with a shop assistant of the store via the network.

### BACKGROUND OF THE INVENTION

A person wishing to purchase products or services ("products" hereinbelow) will go to a shop that stocks the product if the purchase cannot be performed online. When the customer has a question or wants to discuss the product with someone, they will try to ask a store clerk or a store clerk may propose a product to the customer.

In case of products sold over a network, a shop provides a site on the network. The customer visits the site and selects a product that they want to purchase. When the customer has a question on a product before purchasing, the person browses the previously provided descriptive content for the products, or posts a question via e-mail to the store in order to promptly resolve the question.

However, if the customer has little knowledge of the product, and tries to browse the descriptive content related to the product, they may encounter difficulties or require considerable time to understand the description of the content. Even if the person understands the content, their understanding will be limited to the scope of the information uploaded for the description, and any questions they have that are beyond the scope of the description will be impossible to resolve.

In addition, if the person asks a question via e-mail, the answer may or may not be answered promptly, therefore increasing the time the person may have to take before purchasing the product, or, in the worst case, forcing the person to decide not to purchase the product. Such situations represent a lost opportunity for selling a product in which a customer is interested.

In order to resolve the problems, according to the invention disclosed in the following patent reference #1, there is disclosed a system whereby a sales representative who has a portable terminal visits a customer, and a product is sold while the display content is synchronized between the terminal belonging to the sales representative and another representative on the site where the product is being sold.

Patent reference 1: JP-A-2003-281352

### SUMMARY OF THE INVENTION

### PROBLEM TO BE SOLVED BY THE INVENTION

In the invention disclosed in the above patent reference #1, in order to compensate for the lack of technical knowledge the part of a sales representative when the sales representative is engaged in a sale, a technical representative will be standing by on a predetermined server side, and the display will be synchronized between the terminal device of the sales representative and the server of the technical representative to sell a product. Thus, when a customer who does not have such a terminal wants to purchase a product, a sales representative with a terminal may have to travel to where the person is located. Therefore, a problem arises in that the customer may not be able to purchase a product when he or she wants to buy it.

When making such a visit, the sales representative operating the terminal will have had adequate training in using the terminal. Therefore, the access point for the synchronization may be previously decided between only the sales representative and the technical representative. By contrast, if the products are to be sold on a site over a generic network, the sale will be aimed at a plurality of nonspecific purchasers. The access point for the synchronization will need to be publicly released, some of the purchasers are less likely to be skilled in using computers. Accordingly, another problem is presented in that all parties must be able to have access to the access point in an uncomplicated manner.

### MEANS FOR SOLVING THE PROBLEM

The present inventor has invented a sales support system enabling a customer having minimal computer skills to be able to purchase a product by communicating with an assistant associated with an online shop (site) for selling products, while the site display is synchronized.

The invention in accordance with a first aspect provides a sales support system, enabling transmission and reception of data between a terminal for a store clerk for use by a store clerk in a shop selling a product on a network, a customer terminal for use by a customer who desires to purchase a product from the store, and a collaboration server having a port for performing the synchronization of display between the store clerk terminal and the customer terminal, the sales support system comprising store page display means for storing content pertaining to the store and transmitting the content to the customer terminal; and store clerk call means for receiving information of consultation instructions from the customer terminal, selecting one port that can be used on the collaboration server, transmitting to the collaboration server or the customer terminal an instruction of connection via the port between the customer terminal and the collaboration server, and transmitting the number of the selected port and contact information to the customer terminal.

The invention in accordance with a thirteenth aspect provides a sales support method for products using a sales support system enabling data to be transmitted and received between a store clerk terminal for use by a store clerk in a shop selling products on a network, a customer terminal for use by a customer who desires to purchase a product from the store, and a collaboration server having a port for performing the synchronization of display between the store clerk terminal and the customer terminal, the sales support method comprising the steps of selecting one available port which can be used in the collaboration server upon receipt of information of consultation instructions from the customer terminal, transmitting to the collaboration server or the customer terminal an instruction for connecting the customer terminal with the collaboration server via the port, and transmitting the selected port number and contact number to the customer terminal.

The invention in accordance with a fifteenth aspect provides a sales support method, further comprising the steps of connecting the store clerk terminal and the collaboration server via the port by receiving on the store clerk terminal an input of a port number told by a store clerk receiving a telephone call from the customer calling the contact number, and starting a session through the collaboration server between the store clerk terminal and the customer terminal to perform the synchronization.

In accordance with the invention described above, the port number of the collaboration server for display synchronization is known between the customer and the store clerk, allowing the synchronization of the display to be performed via the port. Since the telephone number which is the contact number may be communicated at the same time to the customer, the customer calling the telephone number may communicate directly with a store clerk while browsing the synchronized product information. The customer may immediately receive an answer to a question related to a product. The customer only needs to call a telephone number to tell the port number to the store clerk; therefore, anyone who has minimal computer skills may use the present invention. The term "store clerk" herein refers to a representative who addresses incoming calls from a customer; e.g., any employee (including a representative at a call center) or any person who has no direct employment agreement with the store, when the call center has been outsourced, may address the customer.

The invention according to a second aspect provides a sales support system, the sales support system further comprising store clerk addressing recording means for recording an addressing status of a store clerk of the store; and store clerk list means for transmitting a list of clerks able to be addressed to the customer terminal based on the addressing status of clerks recorded in the store clerk addressing recording means.

The invention according to a fourteenth aspect provides a sales support method, the sales support method further comprising the step of transmitting a status of the store addressable clerks at the store to the customer terminal.

The addressing status of the clerks will thus be transmitted to the customer terminal, whereby the customer will see the status of those clerks.

The invention according to a third aspect provides a sales support method, the sales support system further comprising clerk check-in means for receiving information from the store clerk terminal about a clerk who has newly checked in for work in the store, transmitting the information to the collaboration server and enabling the use of one port of the collaboration server within the range of a number of ports assigned to the store.

If the number of clerks who are working is less than the number of usable ports, then a customer will not synchronize or have to wait for the synchronization, because no clerk will have connected while the customer is connecting with the collaboration server via a port. Such waiting may create distress for the customer, who may lower their opinion of the store. Therefore in the present invention, the number of available ports is kept equal to the number of clerks at work so as to eliminate such waiting.

The invention according to a fourth aspect provides a sales support method, wherein the collaboration server is capable of transmitting and receiving data from and to a charge billing server for billing charges, which collaboration server transmits the billing information to the charge billing server when the store clerk terminal is synchronized with the customer terminal.

There exists in the art a system for accounting the charge of advertisements when a banner is clicked. In the conventional charging method, a charge is registered only when a site is viewed, so that in the view of the advertiser a charge will be registered even if a site view is not associated with an actual purchase (sale). Thus there may be cases in which the advertiser is forced to bear some unnecessary charges. On the other hand, in the configuration according to the present invention, the charge information is recorded on the charge server when the synchronization is performed with the collaboration server, and the charge is only registered when the site view is associated with the purchase of a product. Therefore the present invention is cost-effective in comparison with the prior art, reducing dissatisfaction on the part of the advertiser.

The invention according to a fifth aspect provides a sales support system whereby the store clerk list means updates the display of clerks to be addressed among clerks at work when the addressing status of clerks recorded in the clerk addressing recording means is updated.

The invention according to a sixteenth aspect provides a sales support method in which, when the status of the addressable clerks of the store is updated, the sales support system transmits the updated status to the customer terminal.

As can be appreciated from the foregoing description, the update of the status of the clerks allows a used to be provided with the information about the degree of congestion in the store.

The invention according to a sixth aspect provides a sales support system, in which the customer terminal has synchronization means for performing the synchronization with the store clerk terminal via a port of the collaboration server, storage means for storing the content of the site of the store, and content browsing means for displaying the content. The synchronization means comprises content retrieving means for retrieving the content stored in the storage means to be displayed by the content browsing means, content transmitting and receiving means for obtaining the content from the store page display means to store in the storage means, and update means for notifying the content retrieving means and the store clerk terminal of a content update event when the storage means stores new content.

In addition, in the synchronization means described above, the sales support system may be such that the content retrieving means receives a request to display the content, retrieves the content stored in the storage means if the content corresponding to the content display request is present in the storage means, receives a notification of the content update event, and retrieves the content stored in the storage means if the content corresponding to the content update event is present in the storage means. The content transmitting-receiving means retrieves the corresponding content from the store page display means if the content corresponding to the content display request or the content corresponding to the content update event is not present in the storage means, and stores the content in the storage means.

By arranging the synchronization means of the customer terminal as above, synchronization through a collaboration server may be achieved.

The invention according to an eighth aspect provides a sales support system, in which the store clerk terminal has synchronization means for performing the synchronization with the customer terminal via the port of the collaboration server, storage means for storing the content associated with the store, and content browsing means for displaying the content, in which the synchronization means comprises content retrieving means for retrieving the content to be stored in the storage means and displayed on the content browsing means, content transmitting-receiving means for obtaining the content from the customer terminal to store in the storage means, and updating means for notifying the content retrieving means of a content update event if content is newly stored in the storage means.

In addition in the synchronization means described above, the sales support system may be such that the content retrieving means receives the content display request, retrieves the content stored in the storage means if the content corresponding to the content display request is present in the storage means, receives the notification of the content update event, and retrieves the content stored in the storage means if the content corresponding to the content update event is present in the storage means. The content transmitting-receiving means transmits a request for retrieving content to the customer terminal if the content corresponding to the content display request or the content corresponding to the content update event is not present in the storage means, retrieves the content corresponding to the content retrieving request from the customer terminal, and stores the content in the storage means.

Synchronization via the collaboration server can be' achieved by so arranging the synchronization means of the store clerk terminal.

The invention according to a tenth aspect provides a sales support system in which the synchronization means further comprises control information means for receiving an input of control information on the content from the content browsing means, transmitting the control information via the collaboration server to a counterpart terminal for the synchronization, and having the control information mirrored in the content of the content browsing means based on the control information received from the counterpart terminal.

Providing the control information means as in the present invention allows the input of control information for the content to be mirrored on the counterpart terminal.

The invention according to an eleventh aspect provides a sales support system in which the control information includes any of a scroll-bar movement, change of the size and position of a window, redrawing of content, and movement of a mouse cursor.

The control information as have been described above may be indicated as follows.

The invention according to a twelfth aspect provides a sales support system, in which the control information means arranges a transparent screen laid over the content, transmits to the counterpart terminal the drawing coordinates and drawing type input to the transparent screen, receives the drawing coordinates and drawing type from the counterpart terminal, and draws the drawing type on the transparent screen.

When a figure or a line is drawn on the content, a transparent screen may be arranged to be laid over the content for drawing thereon since complications are presented when drawing directly on the content. According to such an arrangement, the drawing on the transparent screen may be mirrored on the counterpart terminal.

### EFFECT OF THE INVENTION

In accordance with the present invention, a customer who has minimal computer skill may purchase a product while directly communicating with an on-site store clerk. Shopping as conducted in a "real" shop may thus be performed.

There is no need to wait for a sales representative as in the prior art; the customer may purchase a product when he or she wants to buy the product.

If the customer has a question, a store clerk may respond immediately thereto, and the question may be resolved while the customer remains interested in the product in question. This makes it possible to prevent the sales opportunity from being lost. In addition, since direct and real-time communication between the customer and store clerk is achieved, the system can not only accommodate ready-made products but any made-to-order products involving complex requests, thereby allowing a wider range of products to be provided to the customers.

In addition, since a telephone call to a store clerk serves as the basis for interaction, the structure of the shop site can be made unprecedentedly more straightforward. For example, when an order is accepted at a site selling made-to-assemble furniture, a very complex system had to be developed for constructing an automated-sales site including the availability of the combination of some component parts. In contrast, according to the present invention a store clerk responds directly; therefore, such a complex system is not needed. Furthermore, the store site can be simplified as described above; therefore, the system development cost can be lowered. The system cost of the products will also accordingly be lower, resulting products that are provided at lower price.

In addition to the benefits described above, the customer can be attended to by a clerk instead of an automated response issued by a computer on a network site, enabling the user to pose complex questions or express vague nuances (a computer cannot handle any response other than the programmed questions and answers). Furthermore, since the opportunity exists for the product to be offered at a lower price, the likelihood is greater than ever that the customer will be able to purchase the product at a low price.

### BRIEF DESCRIPTION OF THE DRAWINGS

FIG. 1 is a schematic diagram of a system overview indicating the system arrangement of the sales support system in accordance with the present invention;
FIG. 2 is a schematic diagram of a system overview indicating the system arrangement of the synchronization means;
FIG. 3 is a flow chart indicating a typical example of a process of the sales support system;
FIG. 4 is a flow chart indicating a typical example of a process of the sales support system;
FIG. 5 is a schematic diagram indicating a typical example of the clerk list screen;
FIG. 6 is a schematic diagram indicating a typical example of the clerk list screen when a clerk is at work;
FIG. 7 is a schematic diagram indicating a typical example of the consultation button screen;
FIG. 8 is a schematic diagram indicating a typical example of the contact number screen;
FIG. 9 is a schematic diagram of concept of the store clerk addressing recording means;
FIG. 10 is a schematic diagram of concept of the store clerk addressing recording means when a clerk is at work;
FIG. 11 is a schematic diagram indicating a typical example of the clerk available screen;
FIG. 12 is a schematic diagram indicating a typical example of a site of a shop;
FIG. 13 is a schematic diagram indicating the display of contact number screen in the store site;
FIG. 14 is a schematic diagram indicating a typical example of a port number input screen;
FIG. 15 is a schematic diagram indicating a typical example of the clerk available screen when a clerk responds to a customer;
FIG. 16 is a schematic diagram indicating a typical example of process of the synchronization means;
FIG. 17 is a schematic diagram indicating a typical example of process of the synchronization means;
FIG. 18 is a schematic diagram indicating a typical example of process of the synchronization means;
FIG. 19 is a schematic diagram indicating a typical example of a toolbar;
FIG. 20 is a schematic diagram indicating a typical example of content when the change of display position of the scroll is to be synchronized as control information;
FIG. 21 is a schematic diagram indicating a typical example of content when the change of display position of the scroll is to be synchronized as control information;
FIG. 22 is a schematic diagram indicating a typical example of content when the change of display position of the scroll has been synchronized;
FIG. 23 is a schematic diagram indicating a typical example of content when the change of window size is to be synchronized as control information;
FIG. 24 is a schematic diagram indicating a typical example of content when the change of window size is to be synchronized as control information;
FIG. 25 is a schematic diagram indicating a typical example of content when the change of window size has been synchronized;
FIG. 26 is a schematic diagram indicating a typical example of a drawing palette;
FIG. 27 is a schematic diagram indicating a typical example of content when the input to the content is to be synchronized as control information;
FIG. 28 is a schematic diagram indicating a typical example of content when the input to the content has been synchronized as control information;
FIG. 29 is a schematic diagram indicating a typical example of content when the content selected by the store clerk terminal is to be synchronized on the customer terminal;
FIG. 30 is a schematic diagram indicating a typical example of content when the content selected by the store clerk terminal is displayed for the first time on the customer terminal; and
FIG. 31 is a schematic diagram indicating a typical example of content when the content displayed on the customer terminal is displayed on the store clerk terminal and synchronized.

### REFERENCE NUMERALS

1: sales support system
2: collaboration server
3: customer terminal
4: store clerk terminal
5: clerk check-in means
6: store clerk call means
7: shop page display means
8: clerk list means
9: store clerk attendance recording means
10: charge billing server
11: synchronization means
12: content retrieving means
13: control information means
14: content transmitting-receiving means
15: updating means
16: storing means
17: content browsing means

### BEST MODE FOR CARRYING OUT THE INVENTION

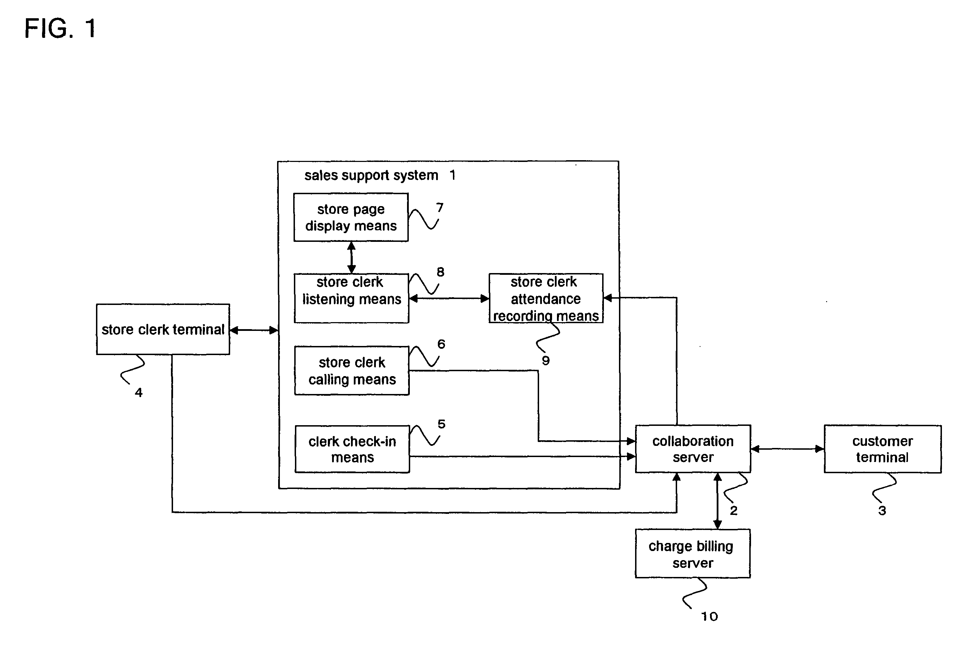

A typical example of the arrangement of a sales support system 1 in accordance with the present invention is shown in the system arrangement diagram given in FIG. 1. The sales support system 1 allows data to be transmitted and received via a network, from and to a store clerk terminal 4 for use by a store clerk in a shop on a network, a customer terminal 3 for use by a customer who desires to purchase a product in the store, a collaboration server 2 for synchronizing the display between the store clerk terminal 4 and the customer terminal 3, and an charge billing server 10 for accounting the charge.

The network may be any open network such as the Internet, a closed network such as LAN, or an intranet which is a combination thereof; and the network may also be wired or wireless.

The sales support system 1 has clerk check-in means 5, store clerk calling means 6, store clerk listing means 8, store page display means 7, and store clerk attendance recording means 9.

The clerk check-in means 5 is means for transmitting to the collaboration server 2 the fact that a clerk is coming in the store on the network (more specifically, when an instruction is received from the store clerk terminal 4 indicating that a clerk is arriving for work). When the instruction is transmitted to the collaboration server 2, a port available to the store clerk terminal 4 is added to the collaboration server 2. Thus, the added port is used for synchronizing the display on the customer terminal 3. In addition, the collaboration server 2, on receipt of the instruction that a clerk is coming in to work, updates the attendance status of the clerk in the store clerk attendance recording means 9 from "off" to "available" (described hereunder).

The store page display means 7 is means for storing the site of the store on the network and transmitting the content of the site in HTML or another format to the customer terminal 3 and to the store clerk terminal 4. The content presented on the site is preferably the product information to be sold in the store.

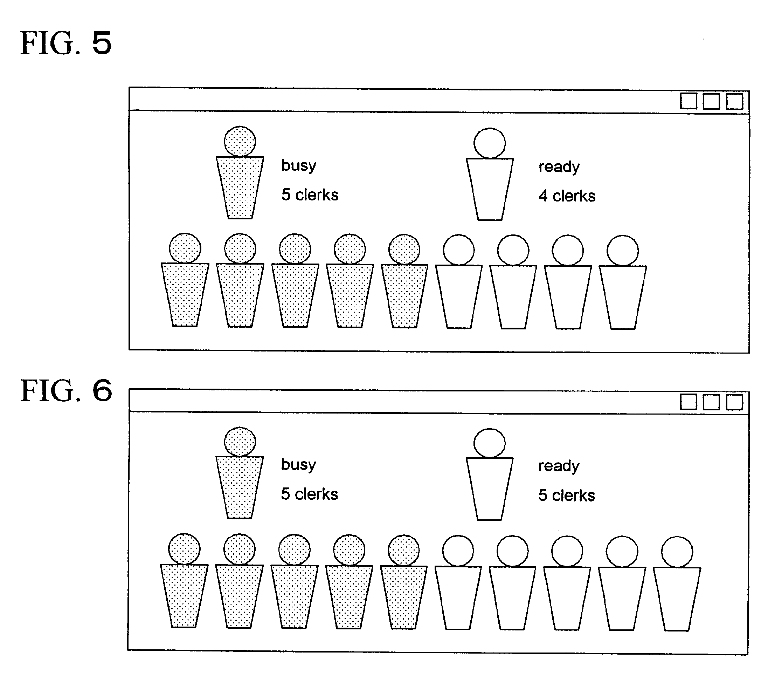

The store clerk listing means 8 is means for transmitting to and displaying on the customer terminal 3 the attendance status of a clerk stored in the store clerk attendance recording means 9. A typical example of the clerk list screen to be displayed is shown in FIG. 5. The store clerk list screen preferably lists any clerks in the store and their attendance status. For example in the store clerk list screen shown in FIG. 5, there are five clerks responding to the incoming call (clerks who are attending to customers in synchronization with another customer terminal 3), and there are four waiting (the clerks in the store who are waiting for an incoming call from a customer).

When a clerk comes into the store, the collaboration server 2, as described above, updates the attendance status of the clerk in the store clerk attendance recording means 9 from "off" to "available". Then the store clerk listing means 8 adds an image of the waiting clerk to be displayed in the clerk list screen, so that five are waiting. The store clerk list screen at this point is shown in FIG. 6.

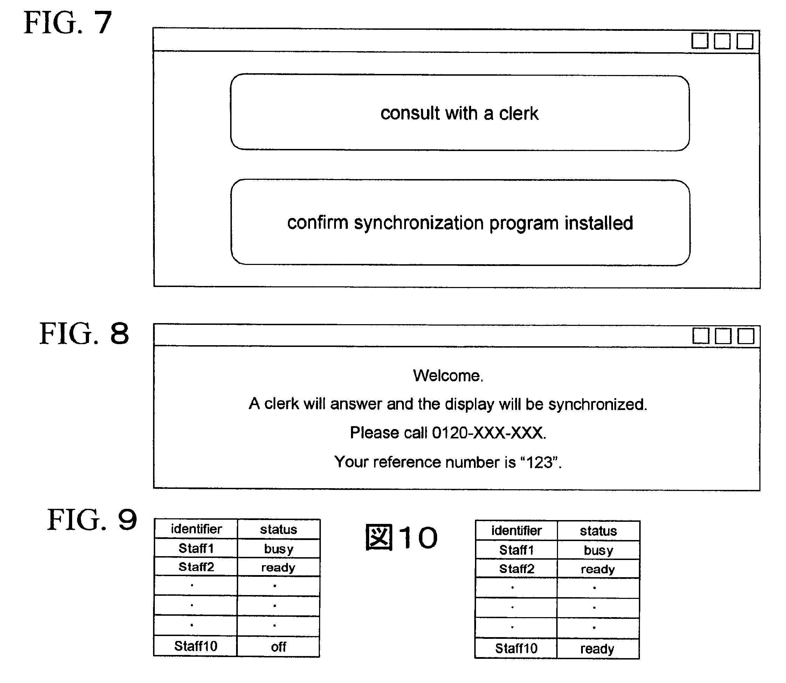

The store clerk calling means 6 is means for transmitting to the collaboration server 2 or to the customer terminal 3 the instruction of connecting the collaboration server 2 with the customer terminal 3 via a port upon receipt of an instruction from the customer terminal 3 when the customer terminal 3 transmits a consultation instruction indicating the customer desires to communicate with a clerk by pressing the "talk to clerk" button (consultation button screen), displayed on the shop site, as shown in FIG. 7. The collaboration server 2 or the customer terminal 3 attempts to connect via the port indicated upon receipt of the instruction. The instruction may be transmitted from either the server or the terminal.

The store clerk calling means 6 is also means for transmitting to the customer terminal 3 the port number and the telephone number which is the contact number for communicating with the store clerk. A typical example of the contact number screen on which the port number and the telephone number are displayed is shown in FIG. 8. In FIG. 8, the term "reference number" is used instead of the technical term "port number", in order to minimize any resistance to the term by those customers who are not so familiar with computers.

The port to be used for the connection is within the range of the number of ports pre-assigned to the store, and is one of the ports made available for the clerk check-in means when a store clerk comes in for work. For example, if the store has 15 ports assigned thereto, and there are 10 clerks at work, then 10 out of 15 are available ports, and one of the unused ones among them is selected.

The customer views the contact number screen on the customer terminal 3, calls the telephone number "0120-xxxx-xxxx" and tells the clerk the reference number "123" (port number 123). The synchronization then starts between the store clerk terminal 4 and the customer terminal 3 via the port number 123, so as to enable the user to purchase a product while communicating directly with the store clerk.

The store clerk attendance recording means 9 is means for recording the status of the site clerks with the clerk identifier for identifying the clerks being related to the status. The status may include "off", "available", "busy" and so on. The overview of the store clerk attendance recording means 9 is shown in FIG. 9.

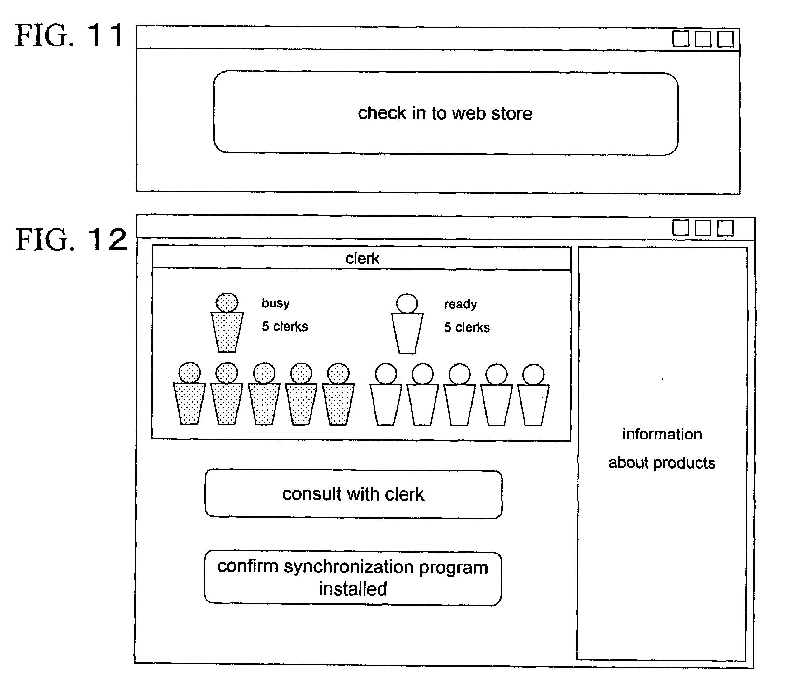

For example, on receiving the instruction from the clerk check-in means 5 indicating that the clerk identified as "staff 10" has arrived for work, the collaboration server 2 will update the status of the clerk in the store clerk attendance recording means 9 from "off" to "available" so as to update the clerk status. The overview of the store clerk attendance recording means 9 after update is shown in FIG. 10.

The charge billing server 10 is a server for receiving the information from the collaboration server 2 when synchronization between the store clerk terminal 4 and the customer terminal 3 commences and for recording the information as charge information. The charge information includes the store, the clerk, the time of address, and the port number used, and in some cases the duration of the transaction may also be recorded. The charge information is recorded in the charge billing server 10, whereby the company maintaining the collaboration server 2 may charge the appropriate shop later to compensate for the use of collaboration server 2.

There exist in the art systems for applying an advertising charge when a banner is clicked. In such billing systems, a charge is applied even when someone has browsed the site; therefore, the advertiser is charged even if the site is viewed without an actual purchase being made. However, when the charge billing server 10 records the accounting charge when synchronization is performed in the collaboration server 2, the charge is only applied when the site is viewed and a product is actually purchased. Therefore the present invention is highly cost-effective, and minimizes dissatisfaction on the part of the advertiser.

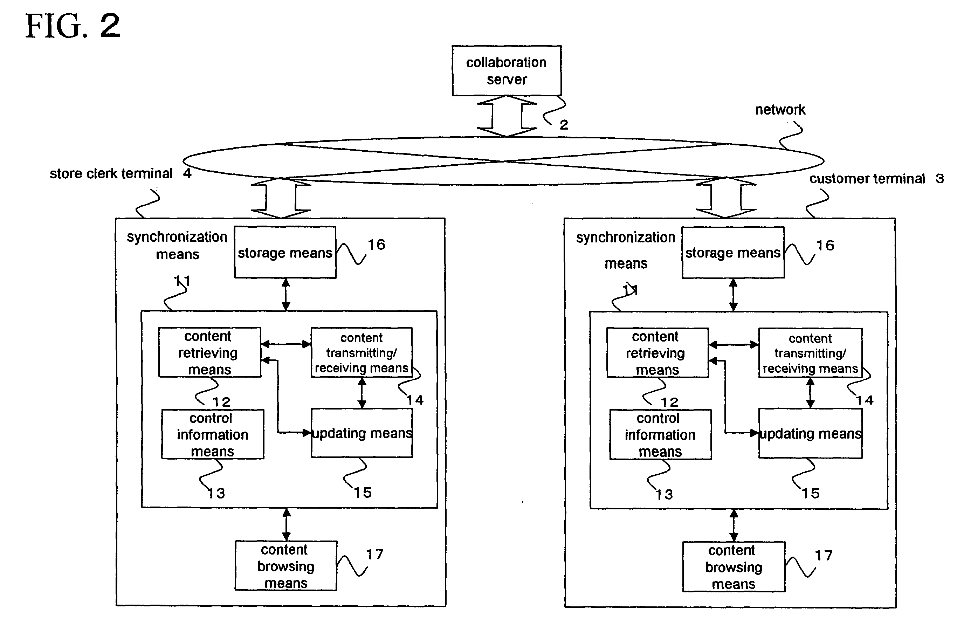

The collaboration server 2 has ports via which synchronization of the displayed shop site between the store clerk terminal 4 and the customer terminal 3 is performed over a network. The synchronization is done via a port made available by the store clerk calling means 6. A variety of synchronization methods can be used for the synchronization; e.g., the synchronization program disclosed in patent application PCT/JP03/01066 and invented by the inventor of the present invention. Synchronization will be described in greater detail hereunder. FIG. 2 shows an overview of the system at the time of synchronization using a synchronization means 11 made with the synchronization program read by a computer terminal. The collaboration server 2 need not be a server, and may be any device able to perform session processing for synchronization via a port between the store clerk terminal 4 and the customer terminal 3.

The store clerk terminal 4 and the customer terminal 3 may be ordinary computer terminals. A synchronization program as shown in FIG. 2 is installed in the store clerk terminal 4 and the customer terminal 3 as synchronization means 11. If the user does not know whether the program has been installed in the customer terminal 3, they can confirm whether the program has been installed by pressing the "confirm installed sync program" button as shown in FIG. 7. If the program has not been installed then the synchronization program will be downloaded from a predetermined server and installed.

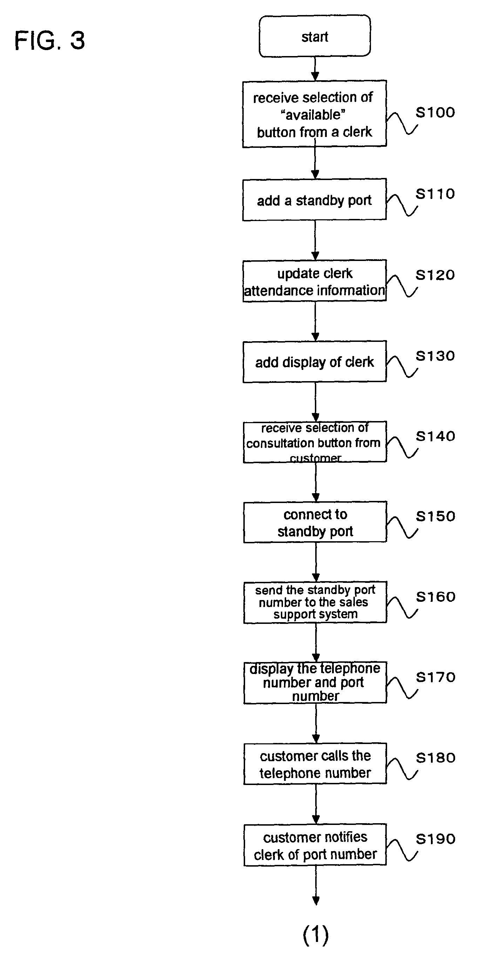

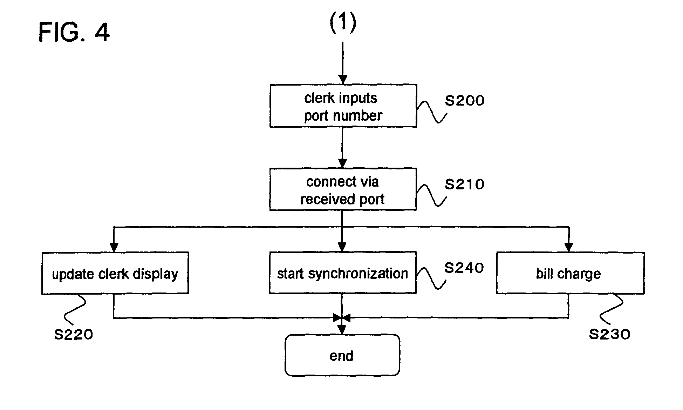

An example of a process for purchasing a product using the sales support system 1 in accordance with the present invention will be described with reference to the flow charts shown in FIGS. 3 and 4, as well as the system arrangement overview shown in FIGS. 1 and 2. In the following embodiment, the synchronization program is assumed to have been installed in the store clerk terminal 4 and to the customer terminal 3.

When a clerk starts his or her work and becomes available for work at the store over a network, the clerk presses the "check in" button on the attendance screen displayed on the store clerk terminal 4 as shown in FIG. 11. A clerk identifier is preferably input to the store clerk terminal 4 at this time in order to distinguish which clerk is checking in for work. By pressing the "check in" button, an instruction indicating that the clerk having the input clerk identifier has checked in for work is transmitted from the store clerk terminal 4 to the clerk check-in means 5 in the sales support system 1. The clerk identifier is also sent along with the instruction.

Upon receipt of the instruction and the clerk identifier (S100), the clerk check-in means 5 then notifies the collaboration server 2. The clerk check-in means 5 then adds a standby port (S110) by making one available from among the range of the number of ports assigned to the store, for use in synchronization with the collaboration server 2. For example, if there are 15 ports assigned to the store and there are 9 clerks present at work, 9 ports are already usable. If another clerk checks in for work, one additional port is then made available. One additional port is thereby made available for each clerk arriving for work. Conversely, when a clerk signs out, one usable port is closed.

The number of usable ports is increased or reduced by the clerk check-in means 5 when a clerk is checks in for work or signs out, whereby the number of ports can be kept the same as the number of clerks at work.

For example, as shown in FIG. 5, when there are 5 clerks who are busy (5 ports in use), and 4 clerks standing by (4 standby ports), then if another clerk comes to work so that there are 5 busy clerks and 5 clerks on standby, then there will be 5 ports in use and 5 standby ports.

Upon receipt of the instruction of S100, the collaboration server 2 will update the status of the clerk having the transmitted identifier from "off" to "available" on the store clerk attendance recording means 9 (S120). Once the clerks status has been updated, the store clerk listing means 8 will add one available clerk to the display of clerks on the clerk list screen (S130). The clerk list screen will accordingly be updated from FIG. 5 to FIG. 6.

The customer accesses the sales support system 1 from the customer terminal 3, and then receives and browses the store site using the store page display means 7. A typical example of the displayed store site is shown in FIG. 12. In the screen shown in FIG. 12, the list of clerks is shown in the left upper half of the site, product information in the store is provided in the right half of the site, and the consultation button screen shown in FIG. 7 is displayed in the left lower half of the site.

When a customer has received the site on his or her customer terminal 3 from the store page display means 7, and presses the "talk to clerk" button for the site, an instruction indicating that the customer wishes to consult with a clerk is sent by the customer terminal 3, and received by the store clerk calling means 6 (S140).

On having received the instruction, the store clerk calling means 6 will select an available port from among the usable ports for synchronization between the collaboration server 2 and the customer terminal 3, and transmit to the collaboration server 2 or the customer terminal 3 an instruction indicating that the customer terminal 3 is to be connected to the collaboration server 2 via the selected port (S150). The collaboration server 2 or the customer terminal 3 having received the instruction will connect via the indicated port. The store clerk calling means 6 will also transmit to the customer terminal 3 the appropriate port number and the telephone number, which is the address for contacting a clerk (S160).

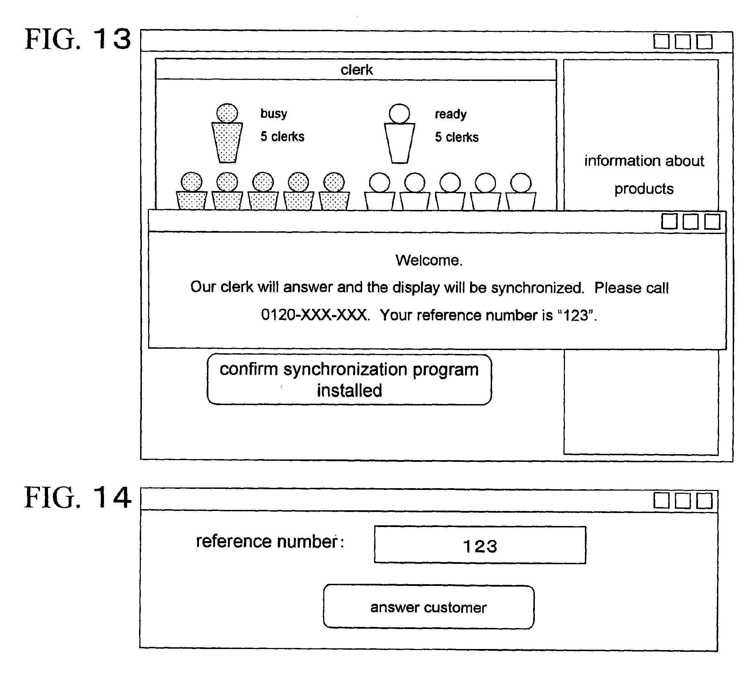

In step S160 a contact number screen as shown in FIG. 8 is displayed on the customer terminal 3 (S170). FIG. 13 shows the screen displayed on the customer terminal 3 at this stage. The customer, on having viewed the contact number on the customer terminal 3, calls the indicated telephone number "0120-xxxx-xxxx" (S180).

A clerk will answer the telephone when their number has been called. The customer will then say the reference number "123" (port number 123) to the clerk on the telephone (S190). On having accepted the port number, the clerk will operate in a predetermined manner to use the store clerk terminal 4 for prompting the synchronization means 11 to input the port number for starting synchronization via, e.g., the port number input screen shown in FIG. 14.

On having been told the reference number "123" in step S190, the clerk will input "123" as the reference number (port number) using the port number input screen shown in FIG. 14 displayed on the store clerk terminal 4 (S200), and then press the "respond to customer" button.

When the button is depressed, the store clerk terminal 4 will attempt to connect to the collaboration server 2 via the indicated port number (123) (S210), then start synchronization (S240). More specifically, the collaboration server 2 will start a synchronization process for keeping the site displayed on the customer terminal 3 the same as the site displayed on the store clerk terminal 4.

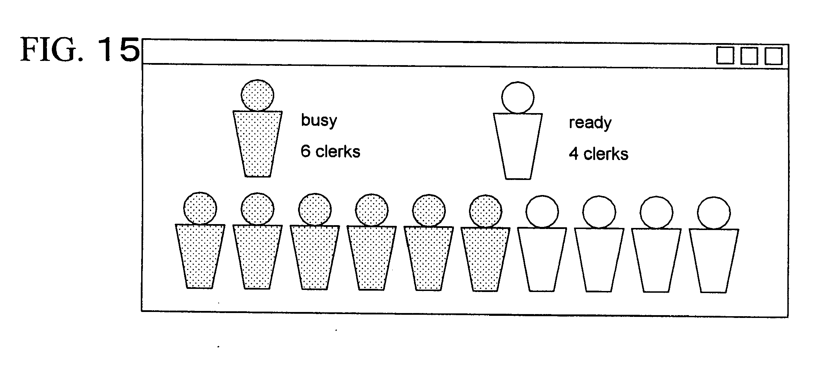

The clerk depresses the "respond to customer" button in the store clerk terminal 4 to being interacting with the customer. The status of the clerk having connected in step S210 will be updated to "serving customer" by the store clerk attendance recording means 9. Once the update has been performed by the store clerk attendance recording means 9, the store clerk listing means 8 will update the list of clerks displayed in the clerk list screen to show six clerks busy and four clerks standing by. More specifically, the screen will be updated from that shown in FIG. 6 to that shown in FIG. 15 (S220).

The starting of the synchronization process (receiving an instruction indicating that the "respond to customer" button has been depressed) causes the collaboration server 2 to send charge accounting information to the charge billing server 10 (S230). Synchronization will have thus officially started (a clerk is communicating directly with the customer), whereby the charge will be very cost-effective.

The synchronization performed by the collaboration server 2 in step S240 between the store clerk terminal 4 and the customer terminal 3 will be described in greater detail. The synchronization means 11 is incorporated in both the store clerk terminal 4 and the customer terminal 3, and performs synchronization via the collaboration server 2. A sample system arrangement of the synchronization means 11 is shown in FIG. 2.

The store clerk terminal 4 and the customer terminal 3 both have storage means 16. The storage means 16 is means for storing the content obtained by the content transmitting/receiving means 14 (described hereunder) from any other terminal, and may correspond to a cache. The means may also be any known storage device such as a memory other than the cache or a hard disk drive.

The store clerk terminal 4 and the customer terminal 3 both have content browsing means 17 known as a web browser. The content browsing means 17 may be a web browser or other application program for synchronizing on a computer terminal. The content browsing means 17 is a web browser application in the specification, but may also be any program including a word-processing, spreadsheet, or presentation application. In the latter case, in addition to or instead of an URL, the information indicating the location of a file is transmitted or received in order for the synchronization to be performed. Synchronization may be performed in the same process whether a web browser, word processor, or other application is used.

The collaboration server 2 establishes a session between the store clerk terminal 4 and the customer terminal 3 via the port connected in step S150 and S210, and performs synchronization.

The synchronization means 11 comprises content retrieving means 12, control information means 13, storage means 16, content transmitting/receiving means 14, and updating means 15.

The content retrieving means 12 is means for retrieving the content from the storage means 16 when a content display request (e.g., the input of an URL or the selection of a link) for the content in the site of the store is received from the customer terminal 3 or the store clerk terminal 4, and the information is displayed using the content browsing means 17.

The content retrieving means 12 is means for retrieving the content from the storage means 16, upon receipt of a content update event transmitted to the content retrieving means 12 by the updating means 15 (described hereunder) when the content stored in the storage means 16 has been updated, and displaying the information via the content browsing means 17.

The control information means 13 is means for accepting a scrolling movement, a changing of the size or position of the window, movement of the mouse cursor, or other control information input by a user to the content browsing means 17, and for transmitting this information to the counterpart terminal via the collaboration server 2.

The control information means 13 is also a means for mirroring the content browsing means 17 when receiving the control information from the counterpart terminal via the collaboration server 2.

The content transmitting/receiving means 14 is means for retrieving the content from another terminal to store in the storage means 16 when the content requested by the content retrieving means 12 is not present in the storage means 16. The content transmitting/receiving means 14 is also means for extracting the content from the storage means 16 when a content transmitting request has been received from the counterpart terminal and for transmitting the content to the counterpart terminal.

If the terminal is a host terminal (described hereunder), then the content transmitting/receiving means 14 will retrieve the content from the store page display means 7 and store it in the storage means 16. If the terminal is a remote terminal (described hereunder), then the content transmitting/receiving means 14 will transmit the retrieving request of the content to the host terminal for that session, will receive from the host terminal the content obtained by the host terminal and stored in the storage means 16, and will store the content in the storage means 16 of the remote terminal.

The updating means 15 is means for notifying the counterpart terminal or the given terminal of a content update event indicating to the content retrieving means 12 that new contents are stored when the new content is stored in the storage means 16. The updating means 15 is also means for receiving a content update event from the counterpart terminal and notifying the content retrieving means 12. The content update event may include any information indicating the content location such as a URL or file location other than the update information.

In the present invention the "host terminal" is a terminal for retrieving content over the network from the store page display means 7 for storing the content of the site of the store. The "remote terminal" is a terminal for issuing a request to the host terminal to retrieve content and retrieving the content from the cache in which the content is stored.

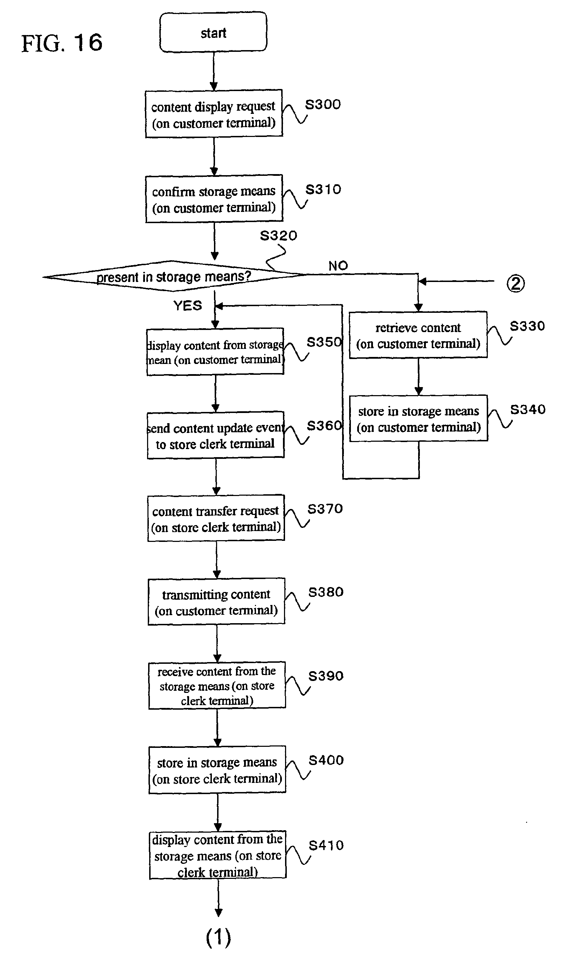

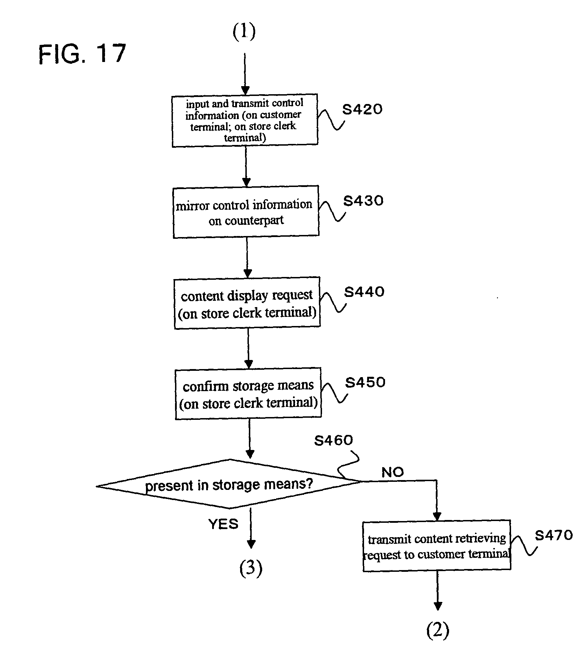

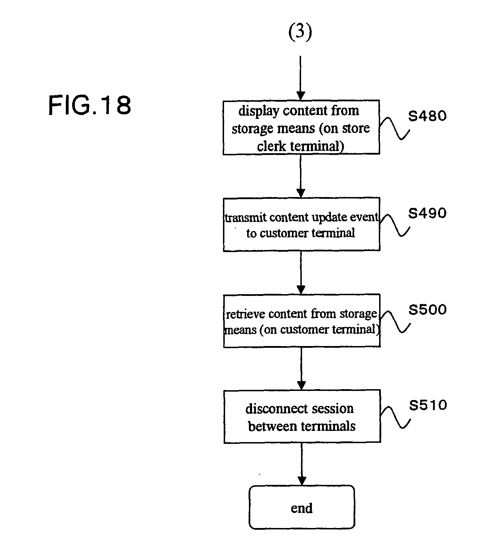

An example of the flow of the synchronization process in the sales support system 1 according to the present invention as performed by the synchronization means 11 will be described with reference to the flow chart shown in FIGS. 16 to 18. In the present embodiment, a case will be described in which the customer terminal 3 of the host side issues a request to retrieve the content of a site of a store in the store page display means 7, performs a control on the customer terminal 3 (host side) or in the store clerk terminal 4 (remote side) after displaying the site, subsequently makes a request to retrieve other content of the site in the store page display means 7 from the store clerk terminal 4 (remote side), and displays the retrieved content.

A session is already established between the store clerk terminal 4 and the customer terminal 3 in steps S150 and S210 via the port number "123". The customer terminal 3 is the host in this case. When a content display request is transmitted to the content browsing means 17 once some content (description content for a product A) has been selected on the store site (S300), the content retrieving means 12 of the customer terminal 3 will confirm whether the content corresponding to the content display request is stored in the storage means 16 in the customer terminal 3 (S310).

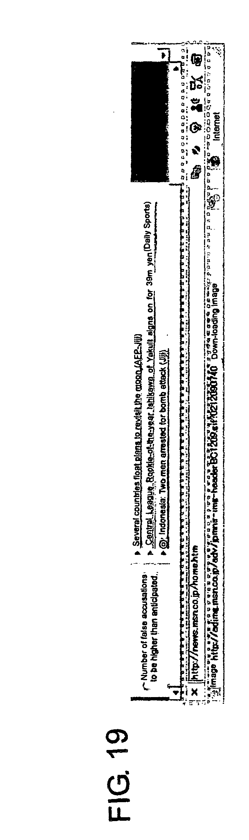

The URL of the selected content in this case (i.e., the URL for use in synchronization) will be displayed in the toolbar as shown in FIG. 19.

If the content is not present in the storage means 16 of the customer terminal 3 (S320), then since the customer terminal 3 is the host, the content transmitting/receiving means 14 of the customer terminal 3 retrieves the content from the store page display means 7 (S330) and stores it in the storage means 16 of the customer terminal 3 (S340).

After the content has been stored in the storage means 16 of the customer terminal 3 in step S340, or when the content is stored in the storage means 16 as the result of confirmation in step S310, the content retrieving means 12 of the customer terminal 3 will obtain the content from the storage means 16 and display it using the content browsing means 17 (S350).

The updating means 15 of the customer terminal 3 will notify the store clerk terminal 4 of a content update event (S360).

Upon receipt of the notification of the content update event from the customer terminal 3, the updating means 15 of the store clerk terminal 4 will notify the content retrieving means 12 in the store clerk terminal 4 of the content update event.

The content retrieving means 12 of the store clerk terminal 4 will confirm whether the content is stored in the storage means 16 of the store clerk terminal 4; however, the content will not be present therein (the check is not mandatory because it is apparent that the content is not stored therein) . Therefore, the content transmitting/receiving means 14 will issue a request to transmit the content to the content transmitting/receiving means 14 of the customer terminal 3 (S370).

On having received the content transmission request, the content transmitting/receiving means 14 of the customer terminal 3 will extract the content from the storage means 16 of the customer terminal 3 for transmission to the store clerk terminal 4 that sent the transmission request (S380).

Once the content transmitting/receiving means 14 of the store clerk terminal 4 receives the content from the content transmitting/receiving means 14 of the customer terminal 3 (S390), the content transmitting/receiving means 14 stores the content in the storage means 16 (S400), and the content retrieving means 12 of the store clerk terminal 4 retrieves the content from the storage means 16 for display using the content browsing means 17 (S410).

As a result, the synchronization can be performed so that the content displayed on the customer terminal 3 is the same content displayed on the store clerk terminal 4. The customer may communicate with the store clerk over the telephone, the customer may ask the clerk a question about a product, and the clerk will answer the question while both parties view the same display.

The input of control information in either the customer terminal 3 or the store clerk terminal 4 will next be described in greater detail.

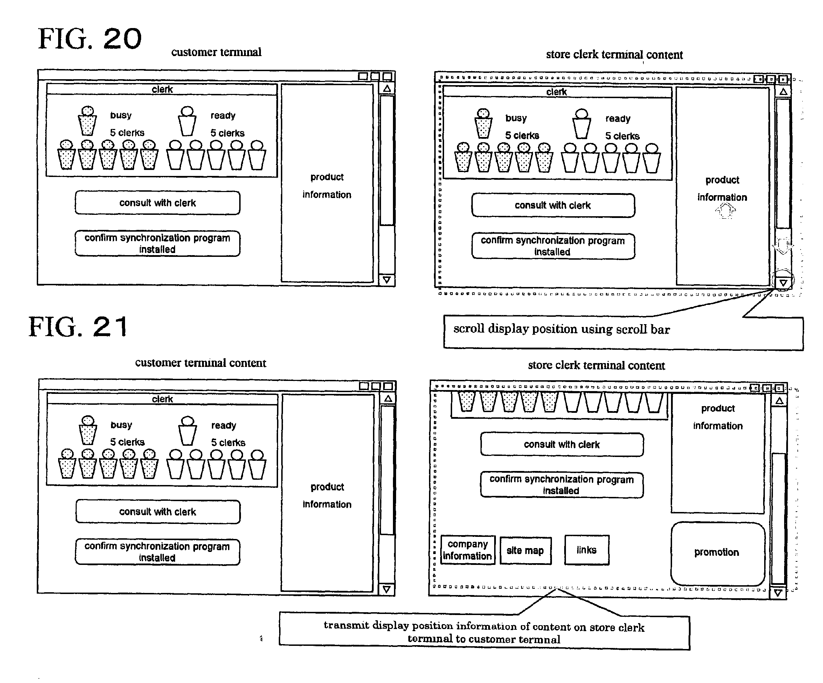

The same content is displayed on both the customer terminal 3 and the store clerk terminal 4. However, when the user of either terminal scrolls, changes the size or position of the window, or inputs any other control information into the content browsing means 17 (FIG. 20 shows a case where a control has been performed to change the content display position using the scroll bar in the store clerk terminal 4), the control information means 13 of the store clerk terminal 4 will receive and transmit the information to the customer terminal 3 via the collaboration server 2 (S420). More specifically, and with reference to FIG. 20, the information on the display position of the content in the store clerk terminal 4 is transmitted as control information. The latter case is shown in FIG. 21.

The position information obtained when the clerk moves the mouse cursor may also be received by the control information means 13 on the store clerk terminal 4 as control information, and transmitted to the customer terminal 3 via the collaboration server 2 to be displayed. More specifically, the relative position of the display screen of the store clerk terminal 4 with respect to the active window as well as of the mouse cursor within the active window, or the absolute position in the display screen, may be obtained as the mouse cursor position information and transmitted.

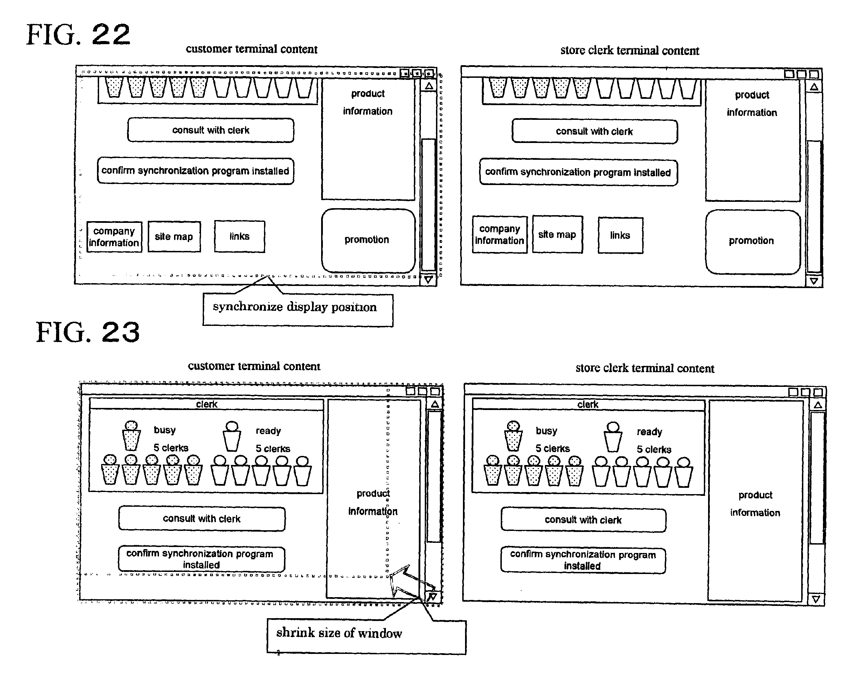

Upon receiving the control information from the store clerk terminal 4 via the collaboration server 2, the control information means 13 of the customer terminal 3 will mirror the received control information on the content browsing means 17 (S430). For example, if the control information includes the vertical movement of the scroll-bar, then the scroll-bar in the content browsing means 17 of the customer terminal 3 will accordingly be vertically moved. If the control information includes a change in the size or position of the window then the size or position of the window in the content browsing means 17 of the customer terminal 3 will accordingly be changed. If the control information includes positional information derived from the movement of the mouse cursor, then the position including the movement of mouse cursor will be displayed (more specifically, the relative position or absolute position on the display screen is obtained as the mouse cursor positional information; therefore, the corresponding position on the display screen will be calculated as the relative or absolute position to be displayed). At this time, the screen may display the status before movement and after movement, or the screen may display the moving sequence. With reference to FIGS. 20 and 21 described above, the display position information is received as control information, while the control information means 13 of the customer terminal 3 will synchronize the display position of the content. This is shown in FIG. 22.

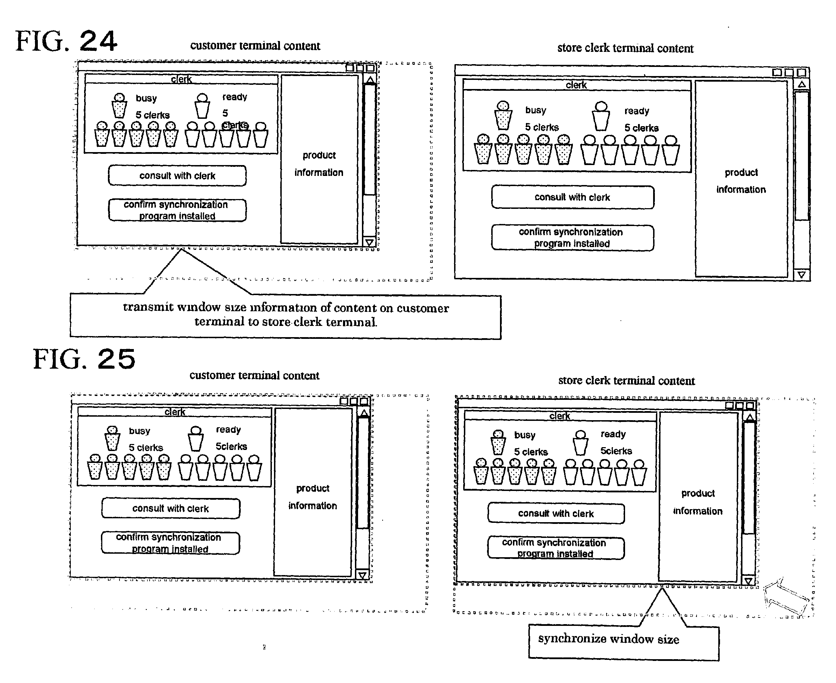

Another example is shown in FIG. 23 in which the size of window associated with the content in the customer terminal 3 has been changed. When a change has been made, the control information means 13 of the customer terminal 3 will transmit to the store clerk terminal 4 information about the window size on the customer terminal 3 as control information. This is shown in FIG. 24. The control information means 13 of the store clerk terminal 4 having received the window size information and other control information from the customer terminal 3 will change the window size of the content based on the control information received in order to synchronize. This is shown in FIG. 25.

According to the process described above, the control information input to the content browsing means 17 of one terminal may be mirrored on the other side terminal.

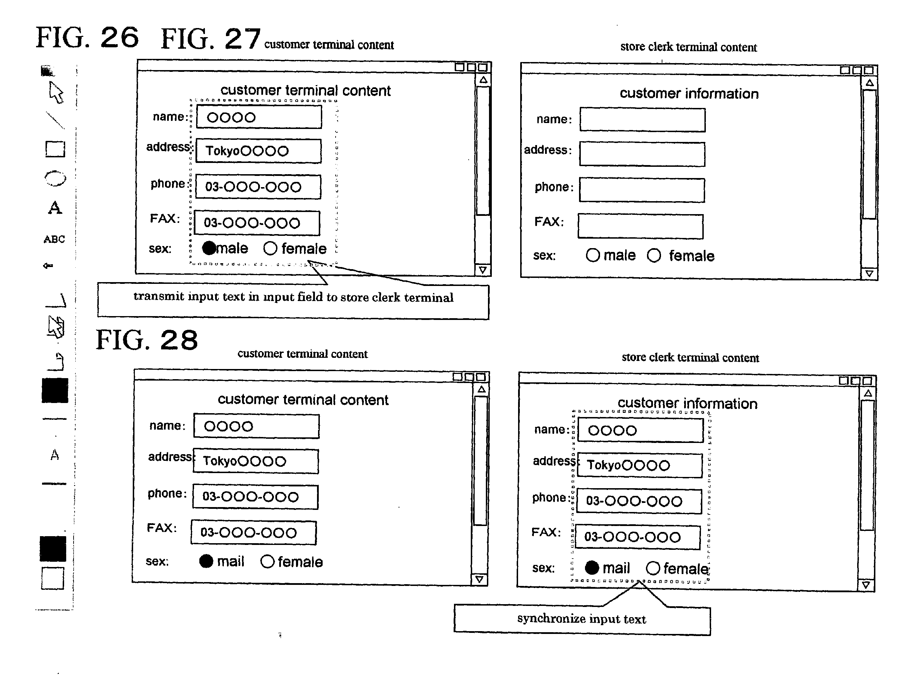

In addition to the movement of scroll-bar, changes in the size or position of the window, the position of the mouse cursor on the display, and other attributes, the control information may include the drawing palette as shown in FIG. 26 along with the content browsing means 17. The user may select a drawing style such as straight lines, rectangles, ellipses, text insertion, marker pen, bitmap paste, polygon, eraser pattern, full screen erase, color selection, line type selection, character font selection, bitmap selection, fill pattern selection, and fill color selection; and draw on the content to reflect the drawing on the content in the counterpart terminal.

More specifically, a transparent screen layer used for detecting the coordinate position of the drawing in the content is laid over the content, whereupon the clerk or customer will draw a straight line, or rectangle, or ellipse thereon as described above. The coordinates of the drawing (preferably the relative coordinates in the content, but optionally the absolute coordinates of the display screen) are then detected on the transparent display screen layer, and the control information means 13 may then send the drawing description (the drawing type; e.g., the relative coordinates of the drawing, straight line, rectangle, ellipse, text, marker-pen, bitmap paste, polygon, erase pattern, full screen erase, color selection, line selection, character font selection, bitmap selection, fill pattern selection, and fill color selection) to the counterpart terminal in the same manner as in step S420.

The control information means 13 of the counterpart terminal will draw on the content browsing means 17 of that terminal based on the relative (or absolute) coordinates and the drawing type in the drawing description thus received.

Synchronization when a text string is input to an input field in the content may also be included in the control information. This is shown in FIG. 27. In FIG. 27, a text string is input into the input field on the customer terminal 3 and a check box is selected. The control information means 13 will send, as control information to the store clerk terminal 4, what is input/selected in which input field, check box, and pull-down menu. The control information means 13 of the store clerk terminal 4 that has received the information changes the content based on the received control information so as to reflect the information. This is shown in FIG. 28. As can be appreciated from the foregoing description, delegate input may also be synchronized as well.

The process flow in the store clerk terminal 4 when a content retrieval request is issued will next be described in greater detail.

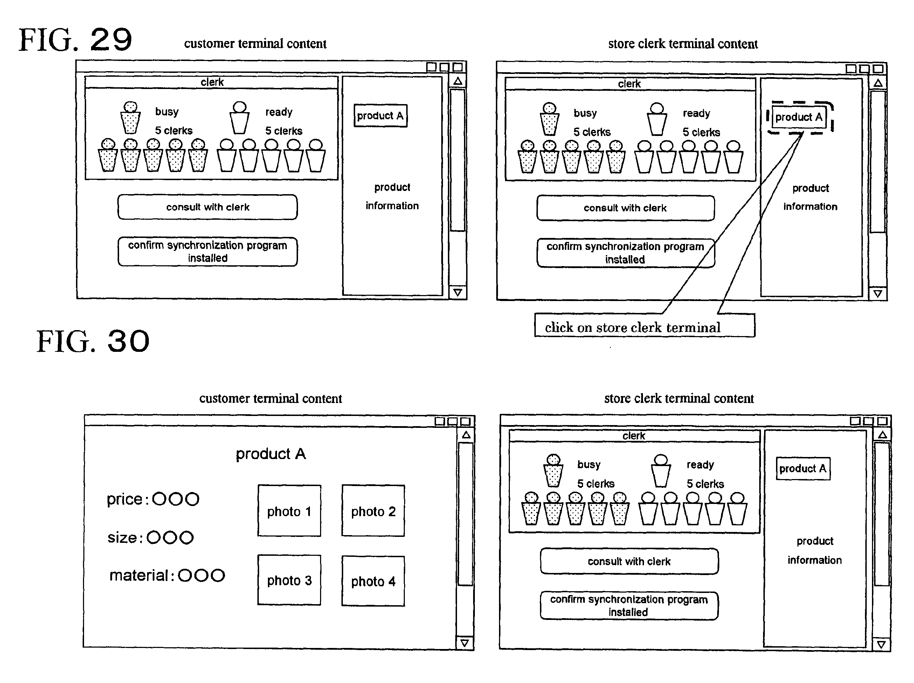

For example, when the clerk who uses the store clerk terminal 4 issues a content display request to the content browsing means 17 by inputting a new URL for the content or selecting (clicking) a link location from the content shown in FIG. 29 (S440), then the content retrieving means 12 of the store clerk terminal 4 will check to see whether the content corresponding to the content display request is stored in the storage means 16 of the store clerk terminal 4 (S450). In FIG. 29, a link location has been selected (clicked). When a URL to be synchronized is thus selected, the URL will be displayed on the toolbar as shown in FIG. 19.

If the requested content is not present in the storage means 16 of the store clerk terminal 4 (S460), then, since the store clerk terminal 4 is the remote terminal, the content transmitting/receiving means 14 of the store clerk terminal 4 will transmit the content retrieval request to the customer terminal 3, which is the host terminal of the current session (S470), and the content retrieved by the customer terminal 3 and stored in the storage means 16 thereof are received from the customer terminal 3 and stored in the storage means 16 of the store clerk terminal 4. In other words, the process after step S330 will be performed.

More specifically, if the requested content is not stored in the storage means 16 of the store clerk terminal 4 on the remote side, then, since the requested content is not present in the storage means 16 of the customer terminal 3 on the host side (because the both terminals are synchronized according to the above process steps), the customer terminal 3 will retrieve the content from the store page display means 7 or another web server and store it in the storage means 16 of both customer terminal 3 and the store clerk terminal 4. By storing the requested content in the storage means 16 of both terminals, the same content may be displayed on the customer terminal 3 and the store clerk terminal 4.

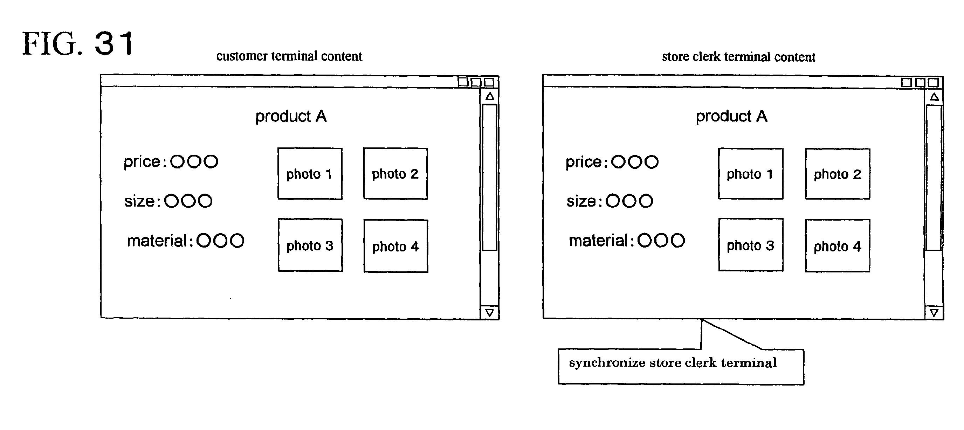

In this case, as shown in FIG. 30, the customer terminal 3, which is the host terminal, will display the content first. The store clerk terminal 4, which is the remote terminal, receives the content update event from the customer terminal 3, which is the host terminal, then displays the same content thereon to achieve synchronization. This is shown in FIG. 31.

As the result of the confirmation in step S450, if the requested content is stored in the storage means 16, then the content retrieving means 12 of the store clerk terminal 4 will retrieve the requested content from the storage means 16 and display the content using the content browsing means 17 (S480).

The updating means 15 of the store clerk terminal 4 notifies the peer customer terminal 3 of the content update event (S490).

Once the content update event has been received from the store clerk terminal 4, the updating means 15 of the customer terminal 3 will notify the content retrieving means 12 on the customer terminal 3 of the content update event.

The content retrieving means 12 of the customer terminal 3 then checks to see if the requested content is stored in the storage means 16 of the store clerk terminal 4. If the requested content is stored in the storage means 16 of the store clerk terminal 4, the content will also be stored in the storage means 16 of the customer terminal 3. The content retrieving means 12 will then extract the requested content from the storage means 16 of the customer terminal 3 for display using the content browsing means 17 (S500).

When the content is displayed on the remote store clerk terminal 4 according to the process flow as described above, the host customer terminal 3 may display the same content.

The content to be displayed on the customer terminal 3 and the store clerk terminal 4 can be synchronized if the corresponding parts of the process flow described above are by suitably repeated. When either the customer or the clerk initiates the predetermined termination operation, the session via the port number "123" between the customer terminal 3 and the store clerk terminal 4 will be disconnected, and synchronization will be terminated.

To perform such synchronization, some sites use a protocol such as SSL (secure socket layer) to ensure security across networks. In such cases, the host side customer terminal 3 is allowed to connect to the sales support system 1 via SSL; however, the remote side store clerk terminal 4, which obtained the content from the storage means 16 of the host side customer terminal 3, is not allowed to connect via SSL. In other words, the communication between the store clerk terminal 4 and the customer terminal 3 is not secure, nor is the communication protected.

For example, if the customer is capable of purchasing a product from the sales support system 1 using a credit card for payment, and the clerk inputs the card information on behalf of the customer, the credit card number and other types of information requiring security are transferred between the host side customer terminal 3 and the remote side store clerk terminal 4. However the information is transferred as plain text in such instances, and no security is provided.

Therefore, if the host side customer terminal 3 is connected via SSL to the store page display means 7, SSL-enabled communication is performed between the host side customer terminal 3 and the remote side store clerk terminal 4 (more specifically, the session between the host side customer terminal 3 and the collaboration server 2, and the session between the remote side store clerk terminal 4 and the collaboration server 2). In this manner, the transmission is entirely secure.

Improper use by clerks is prevented from occurring when products are purchased from a site on a network as taught in the present invention. This is achieved by having a warning displayed on the host side customer terminal 3 when the collaboration server 2 has detected an offer to purchase a product from the store clerk terminal 4. The user is thus able to prevent any unauthorized purchasing of products by the clerk. In this situation the purchase of a product may be performed as a result of the user acknowledging the warning.

The various means according to the present invention are only distinguished by their logical functionality, and may be shared physically or virtually.

It shall be apparent that the present invention may be implemented by providing a system with a recording medium in which a software program for embodying the functionality of the present embodiment is stored, and by having the system computer retrieve and execute the program stored on the recording medium.

The program retrieved from the recording medium embodies the functionality of the preferred embodiment described above, and as shall be apparent the recording medium for storing the program constitutes part of the present invention.

Examples of the recording medium for supplying the program include a magnetic disk, a hard disk, an optical disk, an opto-magnetic disk, a magnetic tape, and a nonvolatile memory card.

It shall further be apparent that the present invention encompasses not only the implementation of the functionality of the preferred embodiment described above via the executing of the program retrieved by the computer, but the implementation of the functionality of the preferred embodiment described above by an operating system running on the computer and performing some or all of the actual processing.

Furthermore, the program read out from a recording medium is written into volatile or nonvolatile storage means 16 provided to an expansion card inserted in a computer or to an expansion unit connected to the computer, whereupon, based on the instruction of the program, part or all of the actual process is performed by a processing unit provided to the expansion board or expansion unit. It shall further be apparent that the present invention encompasses the implementation of the functionality of the preferred embodiment described above due to this process.

### INDUSTRIAL APPLICABILITY

The present invention allows a user who is not familiar with a computer to purchase a product while communicating with a clerk of a online store on a real-time basis. The present invention allows online shopping to be performed as if the user were in an actual retail store.

The present invention eliminates the need to wait for a sales representative to arrive as in the prior art, allowing the customer to purchase a product when he or she wants to buy it.

A store clerk immediately answers questions posed by the customer, and may resolve them while the customer remains interested in the product. This prevents sales opportunities from being lost. In addition, direct and real-time communication between the customer and a store clerk is achieved, thereby allowing ready-made products to be catered for as well as any made-to-order products involving complex requests, in turn allowing a wider range of products to be provided to the customer.

In addition, since a telephone call to a store clerk serves as the basis for interaction, the structure of the store site can be made unprecedentedly more straightforward. For example, when an order is accepted at a site selling made-to-assemble furniture, a very complex system had to be developed for constructing an automated-sales site including the availability of the combination of some component parts. In contrast, according to the present invention a store clerk responds directly; therefore, such a complex system is not needed. Furthermore, the store site can be simplified as described above; therefore, the system development cost can be lowered. The system cost of the products will also accordingly be lower, resulting products that are provided at lower price.

In addition to the benefits described above, the customer can be attended to by a clerk instead of an automated response issued by a computer on a network site, enabling the user to pose complex questions or express vague nuances (a computer cannot handle any response other than the programmed questions and answers). Furthermore, since the opportunity exists for the product to be offered at a lower price, the likelihood is greater than ever that the customer will be able to purchase the product at a low price.

## Claims

1. A sales support system, enabling transmission and reception of data between a terminal for a store clerk for use by a store clerk in a shop selling a product on a network, a customer terminal for use by a customer who desires to purchase a product from said shop, and a collaboration server having a port for performing the synchronization of display between said store clerk terminal and said customer terminal, said sales support system comprising:
store page display means for storing content pertaining to the store and transmitting the content to said customer terminal; and
store clerk call means for receiving information of consultation instructions from said customer terminal, selecting one port that can be used on said collaboration server, transmitting to said collaboration server or said customer terminal an instruction to connect said customer terminal with said collaboration server via said port, and transmitting the number of said selected port and contact information to said customer terminal.

2. A sales support system in accordance with claim 1, further comprising:
store clerk addressing recording means for recording an addressing status of a store clerk of said shop; and
store clerk list means for transmitting a list of addressable clerks to said customer terminal based on the addressing status of said clerks recorded in said store clerk addressing recording means.

3. A sales support system in accordance with claim 1 or claim 2, further comprising:
clerk check-in means for receiving information from said store clerk terminal about a clerk who has newly checked in for work in the store, transmitting said information to said collaboration server, and enabling the use of one port of said collaboration server within the range of a number of ports assigned to said store.

4. A sales support system in accordance with claim 1, wherein
said collaboration server is capable of transmitting and receiving data from and to a charge billing server for billing charges;
said collaboration server transmitting the charging information to said charge billing server when said store clerk terminal is synchronized with said customer terminal.

5. A sales support system in accordance with claim 2, whereby
said store clerk list means updates the display of clerks to be addressed among said clerks at work when the addressing status of clerks recorded in said clerk addressing recording means is updated.

6. A sales support system in accordance with any one of claims 1 to 5, in which
said the customer terminal has synchronization means for performing said synchronization with said store clerk terminal via a port of the collaboration server, storage means for storing the content of the site of said store, and content browsing means for displaying the content;
said synchronization means comprising:
content retrieving means for retrieving the content stored in said storage means to be displayed by said content browsing means;
content transmitting and receiving means for obtaining the content from said store page display means to store in said storage means; and
update means for notifying said content retrieving means and said store clerk terminal of a content update event when said storage means stores new content.

7. A sales support system in accordance with claim 6, in which
said content retrieving means receives said content display request, and retrieves the content stored in said storage means when the content corresponding to said content display request is present in said storage means;
said content retrieving means receives said content update event, and retrieves the content stored in said storage means when the content corresponding to said content update event is present in said storage means; and
said content transmitting-receiving means retrieves the content corresponding to said store page display means when the content corresponding to said content display request or the content corresponding to said content update event is not present in said storage means, and stores the content in said storage means.

8. A sales support system in accordance with any one of claims 1 to 5, in which
said store clerk terminal has synchronization means for performing said synchronization with said customer terminal via the port of said collaboration server, storage means for storing the content of said store, and content browsing means for displaying said content;
said synchronization means comprising:
content retrieving means for retrieving the content to be stored in said storage means and displayed on said content browsing means;
content transmitting-receiving means for obtaining the content from said customer terminal to store in said storage means; and
updating means for notifying said content retrieving means of the content update event if content is newly stored in said storage means.

9. A sales support system in accordance with claim 8, in which
said content retrieving means receives said content display request, and retrieves the content stored in said storage means if the content corresponding to said content display request is present in said storage means;
said content retrieving means receives notification of said content update event, and retrieves the content stored in said storage means if the content corresponding to said content update event is present in said storage means; and
said content transmitting-receiving means transmits a content retrieving request to said customer terminal if the content corresponding to said content display request or the content corresponding to said content update event is not present in said storage means, and retrieves the content corresponding to said content retrieving request from said customer terminal for storing in said storage means.

10. A sales support system in accordance with any one of claims 6 to 9, in which
said synchronization means further comprises:
control information means for receiving an input of control information on said content from said content browsing means, transmitting said control information via said collaboration server to a counterpart terminal for said synchronization, and having the control information mirrored in said content of said content browsing means based on said control information received from said counterpart terminal.

11. A sales support system in accordance with claim 10, in which
said control information includes any of:
a scroll-bar movement, a change of size or position of a window, redrawing of said content, and movement of a mouse cursor.

12. A sales support system in accordance with claim 10 or claim 11, in which
said control information means arranges a transparent screen laid over said content, transmits to said counterpart terminal drawing coordinates and a drawing type input to said transparent screen; and
said control information means receives the drawing coordinates and drawing type from said counterpart terminal, and draws said drawing type on said transparent screen.

13. A sales support method for products using a sales support system enabling data to be transmitted and received between a store clerk terminal for use by a store clerk in a shop selling products on a network, a customer terminal for use by a customer who desires to purchase a product from said shop, and a collaboration server having a port for performing the synchronization of display between said store clerk terminal and said customer terminal, the sales support method comprising the steps of:
selecting one available port which can be used in said collaboration server upon receipt of information of consultation instructions from said customer terminal, transmitting to the collaboration server or the customer terminal an instruction for connecting said customer terminal with said collaboration server via said port; and
transmitting the selected port number and contact number to said customer terminal,

14. A sales support method for products in accordance with claim 13, in which
said sales support system further comprises the step of
transmitting a status of the store addressable clerks at said store to said customer terminal.

15. A sales support method of products in accordance with claim 13, said sales support method further comprising the step of
connecting the store clerk terminal and the collaboration server via said port by receiving on said store clerk terminal an input of said port number told by a store clerk receiving a telephone call from the customer calling said contact number, and starting a session through the collaboration server between said store clerk terminal and said customer terminal to perform the synchronization.

16. A sales support method of products in accordance with claim 14, in which
when the status of the addressable clerks of said store is updated, said sales support system transmits the updated status to said customer terminal.
